# EUROPEAN PATENT APPLICATION

(11) **EP 1 067 396 A2**
(43) Date of publication of application: **10.01.2001**
(21) Application number: 00114632.3
(22) Date of filing: 07.07.2000
(51) Int. Cl.: G01S 13/44

(54) **Self-guarding monopulse antenna**

(30) Priority: 09.07.1999 US 351094
(71) Applicant: TRW Inc., Redondo Beach, California 90278 (US)
(72) Inventor: Toland, Brent T., Manhattan Beach, Ca 90266 (US)
(74) Representative: Schmidt, Steffen J., Dipl.-Ing.

(57) **Abstract**

A self guarding antenna is disclosed. The self guarding antenna (500) includes numerous radiating elements (506), phase shifters (512) and amplifiers (510) coupled to the radiating elements (506). The phase shifters (512) are characterized by individual phase offsets and the amplifiers are characterized by individual gains. The phase offsets and gains are set according to a phase weighting (404) and an amplitude weighting (402) that produce a combined guard and difference pattern (302). A combined channel port (502) may then be connected to the antenna (500) for signal reception (a "combined signal") responsive to the combined pattern (302). A sum channel port (503) may also be included to carry sum signals responsive to a sum gain pattern (304). The sum gain pattern (304) has a main lobe and a diminishing response (312, 314) to either side of the main lobe. The combined pattern (302) includes a central null (306) (in the same fashion as a difference pattern), and skirts (308, 310) that cover the diminishing response (312, 314) in the sum signal (304) (in the same fashion as a guard pattern).

## Description

### BACKGROUND OF THE INVENTION

The present invention relates to antenna design. In particular, the present invention relates to the design of a self guarding antenna that may be used in a monopulse tracking system.

Monopulse direction finding is used in a wide range of applications and particularly in military systems. Generally, a monopulse direction system relies in operation on a sum pattern, a difference pattern, and at least one guard pattern. As explained in more detail below, the ratio of the difference pattern to the sum pattern provides an indication of antenna direction with respect to an incident signal emanating from an object to be tracked. The guard pattern may be used to ensure that only the sensitive main lobe (rather than the less sensitive side lobes) of the sum pattern is used for pointing determination. The guard prevents an erroneous pointing determination by suppressing signals incident on the sidelobes and limiting tracking to the main beam region.

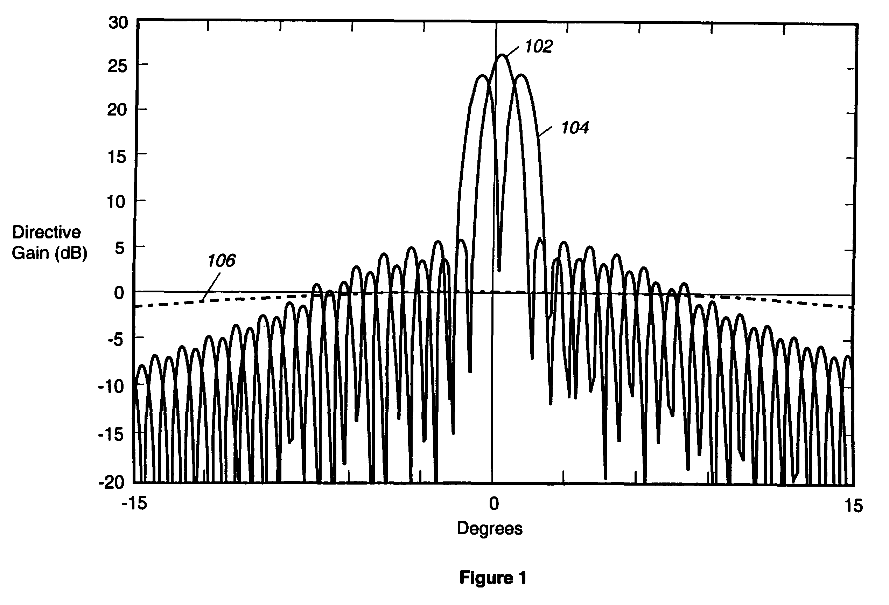

Turning now to Figure 1, that figure shows an exemplary set of three gain patterns used in monopulse tracking systems: a sum pattern 102, a difference pattern 104, and a guard pattern 106. The sum, difference, and guard "channels" are generally regarded as the individual signal connections that are responsive to the sum, difference, and guard patterns that are characteristic of the antenna or antennas used.

The sum pattern 102 has a main lobe at the point where the directional gain of the antenna is strongest. The peak of the sum pattern 102 is at the center of the main lobe and falls off quickly to either side, only to repetitively rise and fall again in a series of smaller peaks or "side lobes". Because the sum pattern 102 is slowly varying around its peak, it alone does not provide a highly accurate indication of pointing direction.

The second pattern shown in Figure 1 is the difference pattern 104. The difference pattern 104 has a null (i.e., it produces nearly zero gain) near where the peak of the sum pattern is located. The difference pattern 104 rises sharply in response about the central null. Like the sum pattern 102, the difference pattern 104 includes a diminishing series of peaks and nulls.

By determining the ratio of the sum pattern 102 and the difference pattern 104, a monopulse tracking system may accurately determine the angular direction of a received signal (which typically originates or is reflected back from a target to be tracked). The ratio goes to a minimum when the antenna is pointed at the target, and varies linearly to either side according to the angle between the current antenna direction and the target direction.

However, the ratio of the sum pattern 102 to the difference pattern 104 provides multiple angular solutions due to the repetitive peaks and nulls in the two patterns and the resulting sawtooth nature of the ratio. To overcome this problem, one or more additional patterns (the guard patterns) may be generated by separate antennas and used to differentiate between the multiple solutions. In Figure 1, a single guard pattern 106 is used to ensure that the main lobe of the sum pattern 102 is used for pointing determination.

Because only a single guard pattern 106 is used, it must have a lower gain than the sum pattern 102 in the main lobe region of the sum pattern 102, and a higher gain than the sum pattern 102 in the side lobe region of the sum pattern 102. If a signal level as detected on the guard channel is higher than the signal level as detected on the sum channel, the signal is recognized as incident in the side lobe region of the sum pattern 102. On the other hand, if a signal level as detected on the guard channel is lower than the signal level as detected on the sum channel, the signal is recognized as incident in the main lobe region of the sum pattern 102. A monopulse tracking system preferably uses the main lobe region and the corresponding region in the difference pattern to form the ratio indicative of antenna pointing.

Difficulties with past systems, however, included the expense and complexity associated with generating the sum, difference, and guard channels. Generally, each channel required a separate complex receiver. Furthermore, the guard channel often required an additional broadband guard antenna to generate a suitable guard pattern. The duplication in receiver and antenna hardware were primary driving forces in the added costs, complexity, and unreliability of past monopulse tracking systems.

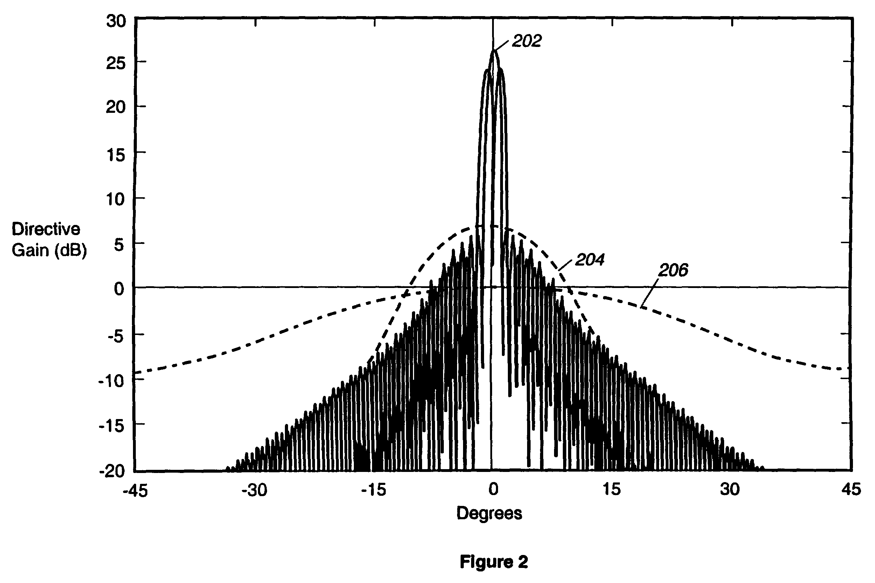

With reference to Figure 2, that figure shows a set of antenna patterns including two guard patterns 204, 206. In past systems, it was not always possible to generate a single guard pattern that covered all the side lobes of the sum pattern 202 without covering the main lobe of the sum pattern 202. Therefore, two guard channels, such as the near and far guard channels 204 and 206, generated by individual antennas, were used. The near guard 204 covers that part of the side lobe region of the sum pattern 202 nearest the main lobe region of the sum pattern 202. The far guard 206 covers that part of the side lobe region of the sum pattern 202 farther out from the main lobe region of the sum pattern 202. Together, the guard patterns 204 and 206 appropriately cover the entirety of the sum pattern 202. A tracking system may then detect, and preferably use for pointing determination, a signal smaller in amplitude on the guard channels than on the sum channel.

As noted above, however, for each guard channel additional equipment (e.g., a receiver, signal processor, and antenna) is required. The additional equipment can create substantial increases in costs, complexity, and unreliability. This is particularly true for large arrays of antennas that provide sophisticated tracking capability.

A need has long existed in the industry for a self guarding antenna suitable for use, for example, in a monopulse tracking system.

### BRIEF SUMMARY OF THE INVENTION

It is an object of the present invention to provide a self guarding antenna.

Another object of the present invention is to provide a tracking system using a self guarding antenna.

It is another object of the present invention to reduce the cost and complexity of a self guarding antenna.

Yet another object of the present invention is to provide a self guarding phased array antenna.

One or more of the foregoing objects is met in whole or in part by a self guarding antenna that includes numerous radiating elements, phase shifters and amplifiers coupled to the radiating elements. The phase shifters are characterized by individual phase offsets and the amplifiers are characterized by individual gains. The phase offsets and gains are set according to a phase weighting and an amplitude weighting that produce a combined guard and difference gain response pattern in the antenna. A combined channel port may then be connected to the antenna for signal reception (a "combined signal") responsive to the combined pattern.

A sum channel port may also be included to carry sum signals responsive to a sum gain pattern. The sum gain pattern has a main lobe and a diminishing response to either side of the main lobe. The combined pattern includes a central null (in the same fashion as a difference pattern), and skirts that cover the diminishing response in the sum signal (in the same fashion as a guard pattern).

Ratio circuitry may further be coupled to the antenna to generate a ratio of the combined difference and guard signal to the sum signal. Pointing determination circuitry may then be provided to interpret the ratio (which is indicative of the pointing direction of the antenna with respect to an incoming signal).

The present invention also provides a method for operating a phased array antenna as a self guarding antenna. The method configures the phase shifters and the amplitude controllers in the phased array according to a phase weighting function and an amplitude weighting function. The result is a combined guard and difference pattern (the "combined pattern") response in the antenna. A combined signal connection is then provided to carry a combined signal developed by the antenna.

The weighting functions produce in concert a combined pattern having a central null located in a main lobe of a predetermined sum pattern (which may also be generated by the phased array antenna using a separate set of amplitude and phase controllers). The combined pattern also includes skirts to either side of the central null and above corresponding skirts in the sum pattern over a predetermined angular range. The method may also form a ratio of the combined signal to the sum signal, and determine a pointing angle of the antenna with respect to an incident received signal based on the ratio.

### BRIEF DESCRIPTION OF THE DRAWINGS

Figure 1 illustrates the gain patterns for a sum, difference, and guard channel in a monopulse tracking system.
Figure 2 illustrates the gain patterns for a sum, difference, near guard and far guard channel in a monopulse tracking system.
Figure 3 illustrates the gain patterns for a sum and combined channel of a self guarding antenna according to the present invention.
Figure 4 illustrates one possible assignment of phase and amplitude responses for the elements of a phased array antenna to generate a combined gain pattern of a self guarding antenna.
Figure 5 shows a high level block diagram of a phased array antenna design that may be configured as a self guarding antenna.
Figure 6 shows a flow diagram for direction finding using a self guarded antenna.
Figure 7 illustrates another view of the gain patterns of Figure 3 over the range -15 degrees to +15 degrees.
Figure 8 illustrates one example of ratio determination circuitry.
Figure 9 depicts an example of point determination and control circuitry.

### DETAILED DESCRIPTION OF THE INVENTION

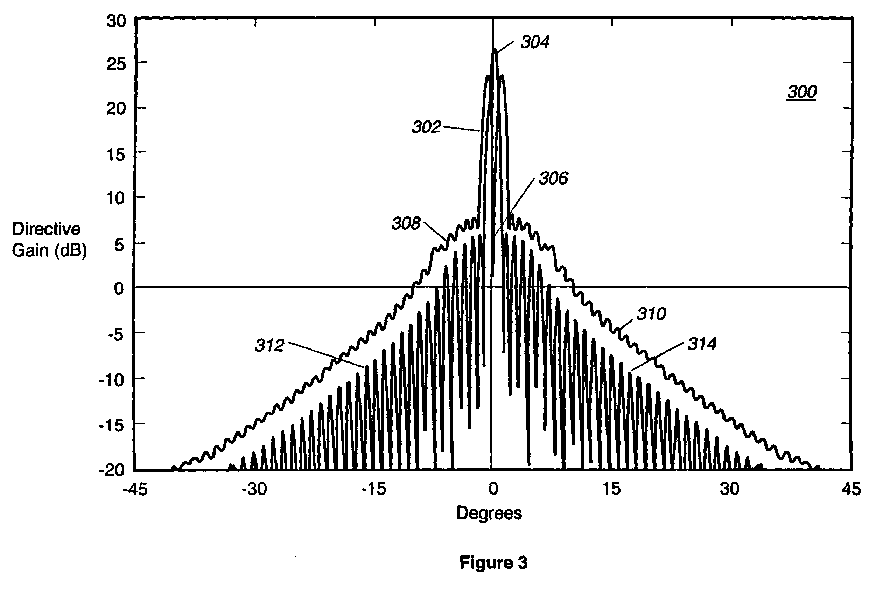

Turning first to Figure 3, that figure illustrates the gain patterns 300 for a sum channel and a combined guard and difference channel (a "combined channel"). The sum channel is responsive according to the sum pattern 304, while the combined channel is responsive according to the combined pattern 302. The combined pattern 302 performs both the traditional role of the difference pattern and the traditional role of the guard pattern.

Note that the combined pattern 302 includes a central null 306, but that its skirts 308, 310 have had the nulls "filled in" and that the skirts 308, 310 are raised above the sum pattern skirts 312, 314. The combined pattern 302, however, remains less responsive that the sum pattern in the region of the sum pattern main lobe. As will be discussed in more detail below, in a phased array antenna, for example, the weights (phases and amplitudes) of the array elements may be appropriately chosen to create the combined pattern 302.

The combined pattern 302 results in a gain pattern that has the desired features of both a guard pattern and a difference pattern. Thus, the guard channel, guard antenna, and associated receiver hardware may be eliminated.

A signal as detected on the combined channel that is greater than the signal as detected on the sum channel indicates that the signal was incident at an angle corresponding to the skirts 308, 310 of the combined pattern 302. On the other hand, if the signal as detected on the combined channel is smaller than the signal as detected on the sum channel, the signal is incident in the main lobe region of the sum pattern 304. The main lobe region is preferably used for pointing determination.

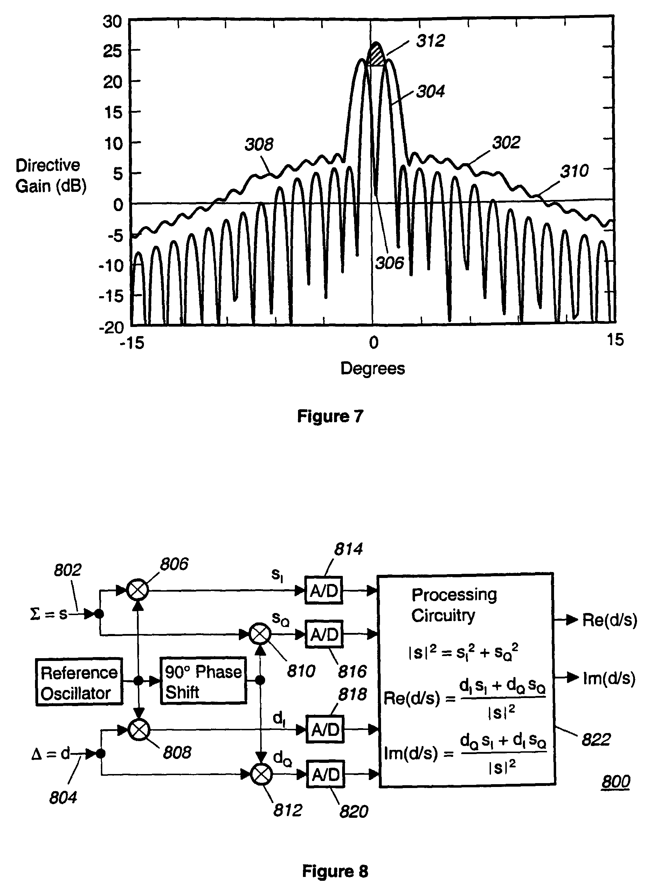

A closer view of the gain patterns of Figure 3 is provided in Figure 7. In Figure 7, the combined pattern 302 and the sum pattern 304 are illustrated over a range of -15 degreed to +15 degrees. Note again the central null 306 in the combined pattern 302 as well as the skirts 308, 310 which provide a guard over the sum pattern 302. The main lobe area 312 (preferably used for pointing determination) is also indicated.

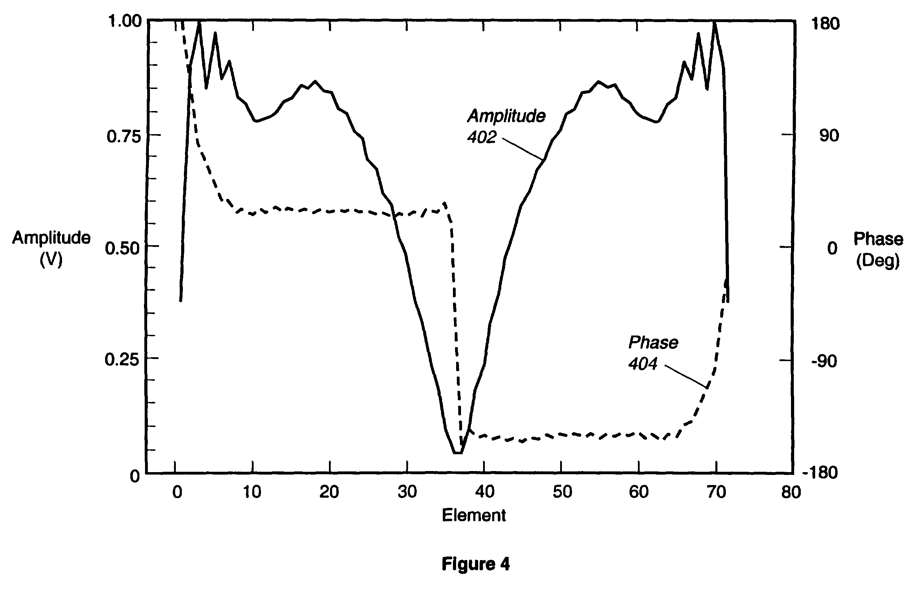

With reference to Figure 4, that figure illustrates an example of an amplitude weighting 402 and a phase weighting 404 (both as a function of element number) . The weightings 402, 404 generate a suitable combined pattern (See Figure 3) in a 72 element phased array antenna for use, for example, in a monopulse tracking system. The amplitude weighting 402 is plotted for each of the 72 elements in the example array. Each amplitude weight may then be used to control an amplifier behind a radiating element. Similarly, the phase weighting 404 is plotted for each of the 72 elements in the example array. A phase shifter behind each radiating element may then configured according to each point in the phase weighting 404 to generate (in conjunction with the amplitude weightings) the desired combined pattern.

The present invention, however, is not limited to phased array antennas in general, or any particular implementation of a phased array antenna. Rather, optimization techniques, for example those disclosed in *Optimising the synthesis of shaped beam antenna patterns*, IEEE Proceedings, Vol. 132, pt. H, no.1, Feb. 1985, by H. J. Orchard, R. S. Elliot and G.J. Stern, may be used to generate a combined pattern with a central null and raised skirts in phased array antennas with widely varying numbers of elements.

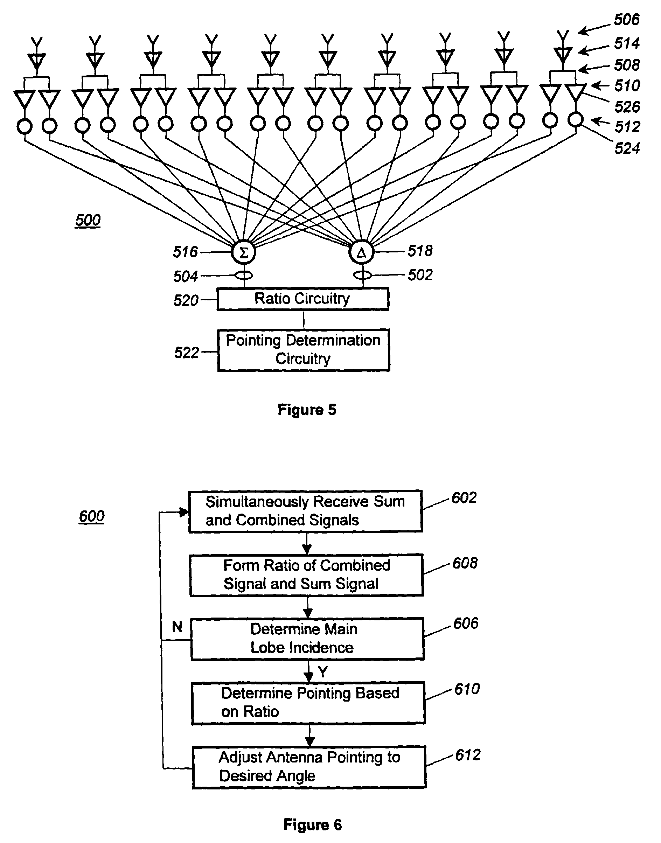

Turning now to Figure 5, that figure shows one example of a self guarding phased array antenna 500. The antenna 500 includes antenna elements 506, low noise amplifiers 514, power dividers 508 behind the individual antenna elements 506 that divide a signal incident on the array into two signals that are routed through two control paths or "channels": the sum channel and the combined beam channel. A combined channel port 502 and a sum channel port 504 (either of which may be a simple signal connection or an output connector) are also shown and may provide the combined and sum signals to any desired signal processing functions downstream. Each channel consists of amplitude controls 510 and phase controls 512 (e.g., delay elements such as phase shifters) that shape the beams for each channel. Each channel is combined to form the sum signal (at the sum channel combiner 516) and difference signal (at the difference channel combiner 518). These two signals are then compared with the ratio circuitry 520 which generates a complex control voltage that can be used by the pointing determination circuitry 522 to determine the direction of the incident signal and/or point the antenna in the direction of the incident signal (i.e., move the sum beam peak onto the incident signal).

The phase shifters may be preset or may include a control input (e.g., the phase control input 524) to dynamically and individually set the phase shift introduced by the associated phase shifter to achieve a desired response. Similarly, the amplitude controllers may be preset or may include a control input (e.g., the amplitude control input 526) to dynamically and individually set the gain of the amplitude controller to achieve a desired response.

The ratio circuitry 520 (which may be an analog signal divider or a more sophisticated digital signal processor, for example) forms a ratio of the combined signal to the sum signal. The ratio is approximately linearly related to the incoming angle (with respect to the antenna) of a received signal. Thus, the pointing determination circuitry 522 may use the approximately linear relation to determine the pointing of the antenna with respect to the incoming signal. The pointing determination circuitry 522 may also, for example, be implemented in the digital signal processor. Alternatively, the pointing determination circuitry 522 may be implemented with analog circuitry.

With respect to Figure 4, each of the 72 phase shifters in the control matrix 504 may be configured according to the element by element phase weighting 404. Similarly, each of the 72 amplitude controllers may be configured according to the element by element amplitude weighting 402. A combined response results, that has both the desirable characteristics of a guard pattern and a difference pattern, as explained above. Thus, the antenna port 502 may then be used as the combined channel in the self guarding antenna 500.

Turning now to Figure 6, that figure shows a flow diagram 600 of a tracking method using a self guarding antenna. At step 602, the tracking system receives a sum signal produced in the sum channel upon reception of a signal. Simultaneously, the tracking system receives a combined signal produced in the combined channel upon reception of the signal. As noted above, the combined channel has a characteristic combined response including the desired properties of a guard pattern and the desired properties of a difference pattern.

At step 608, the tracking system forms the ratio of the combined signal to the sum signal. This ratio may be determined, for example, using analog circuitry, or digital processing techniques. This ratio is first used to determine if the signal is incident in the main beam at step 606. As noted above, the main lobe determination may be made by comparing the sum signal strength to the combined signal strength. A combined signal strength that is less than the sum signal strength provies an indication that the angle of reception lies in the main lobe of the sum signal. If the singla lies outside the main lobe of the sum signal, the tracking system preferably adjusts the antenna pointing until the signal does lie inside the main lobe. This ratio is also used to determine pointing direction.

At step 608, the tracking system, at step 608, may then form the ratio of the combined signal to the sum signal. The ratio may be determined, for example, using analog circuitry, or using digital processing techniques. As noted above, the ratio generally goes to a minimum when the antenna is pointed directly at the object to be tracked, and increases linearly with the angle between the antenna and the object generating or reflecting the received signal. Thus, at step 610, the tracking system may determine the angle between the antenna and the received signal direction.

Finally, at step 612, the tracking system may adjust the antenna pointing to any desired angle at step 612. Thus, for example, the antenna may be gimbaled or mechanically adjusted to a new angle to precisely track an object (or to maintain a constant pointing angle with respect to an object). Alternatively, the phase and amplitude weights of a phased array antenna may be adjusted to electronically steer the antenna to the desired angle.

On the other hand, for a direction finding or Angle-of-Arrival (AOA) application, a digital processor may use the combined signal to sum signal ratio (a complex voltage) to estimate the location of the target with respect to the antenna pointing direction. This estimate can be used to locate the target with respect to a user defined reference frame.

Figure 8 depicts one type of monopulse processor 800. Given sum and difference input signals (802 and 804), the mixers 806-812 mix down the signals to a intermediate frequency that is low enough to be sampled by the A/D converters 814-820. During the mixing process, the signals are split into real and imaginary components (the signals are complex waveforms) referred to as SI and SQ (where I indicates the "in-phase component", and Q indicates the "quadrature component"). These components are sampled by the A/D converters 814-820, and a processor 822 computes the ratio of D/S (either channel may be used).

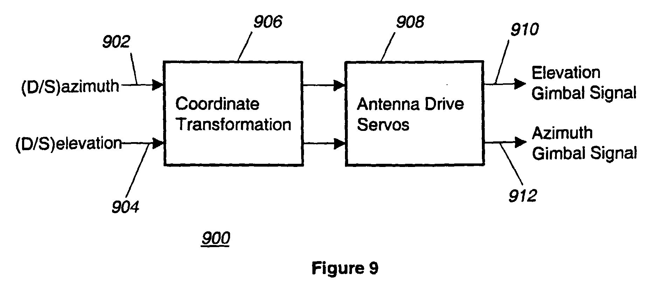

Figure 9 shows pointing determination circuitry 900 using two D/S ratios as input; the azimuth input 902 and the elevation input 904. The two D/S inputs 902 and 904 may be processed by the coordinate transformation section 906 to determine coordinate offsets and produce drive voltages for the servos 908, which move the antenna. The drive voltages may be an elevation gimbal signal 910 and an azimuth gimbal signal 912 as examples.

While particular elements, embodiments and applications of the present invention have been shown and described, it is understood that the invention is not limited thereto since modifications may be made by those skilled in the art, particularly in light of the foregoing teaching. It is therefore Contemplated by the appended claims to cover such modifications and incorporate those features which come within the spirit and scope of the invention.

## Claims

1. A self guarding antenna comprising:
a plurality of radiating elements;
a plurality of phase shifters coupled to said radiating elements, said phase shifters characterized by individual phase offsets;
a plurality of amplifiers coupled to said radiating elements, said amplifiers characterized by individual gains, wherein said phase offsets and said gains are set according to a phase weighting and an amplitude weighting that produce a combined guard and difference pattern; and
a combined channel connection responsive to said combined pattern.

2. A self guarding antenna as recited in claim 1, wherein said combined pattern includes a central null.

3. A self guarding antenna as recited in claim 1, further comprising a sum channel connection responsive to a sum gain pattern having a main lobe and a diminishing response to either side of said main lobe.

4. A method for operating a phased array antenna as a self guarding antenna, the method comprising:
configuring a plurality of delay elements in said phased array antenna according to a phase weighting function;
configuring a plurality of amplitude controllers in said phased array antenna according to an amplitude weighting function, said phase weighting function and said amplitude weighting function producing a combined guard and difference pattern; and
establishing a combined signal connection to said phase shifters and said amplitude controllers, said combined signal connection carrying a combined signal, generated in accordance with said combined pattern.

5. The method of claim 4, wherein said configuring steps comprise configuring said delay elements and said amplitude controllers with weighting functions producing a combined pattern having a central null on a main lobe of a predetermined sum pattern.

6. A method for determining pointing of a self guarding antenna, the method comprising:
establishing a combined signal connection to a plurality of phase shifters and amplitude controllers configured according to a phase weighting function and an amplitude weighting function providing a combined antenna pattern, said combined signal connection carrying a combined signal;
establishing a sum signal connection to said phased array antenna, said sum signal connection carrying a sum signal; and
forming a ratio of said combined signal to said sum signal indicative of pointing of said antenna.

7. The method of claim 6, further comprising calculating an angle-of-arrival of a signal incident on said antenna without repointing said antenna.

8. The method of claim 6, further comprising calculating an angle-of-arrival of a signal and responsively repointing said antenna.
